# EUROPÄISCHE PATENTSCHRIFT

(11) **EP 4 505 304 B1**
(45) Veröffentlichungstag und Bekanntmachung des Hinweises auf die Patenterteilung: **17.06.2026**
(21) Anmeldenummer: 23708469.4
(22) Anmeldetag: 28.02.2023
(51) Int. Cl.: G06F 11/36

(54) **TEST EINER AUTOMATISCHEN FAHRSTEUERFUNKTION MITTELS SEMI-REALER VERKEHRSDATEN**
TESTING AN AUTOMATIC DRIVING CONTROL FUNCTION BY WAY OF SEMI-REAL TRAFFIC DATA
TEST D'UNE FONCTION DE COMMANDE DE CONDUITE AUTOMATIQUE AU MOYEN DE DONNÉES DE CIRCULATION SEMI-RÉELLES

(30) Priorität: 06.04.2022 DE 102022203422
(43) Veröffentlichungstag der Anmeldung: 12.02.2025
(73) Patentinhaber: Stellantis Auto SAS, 78300 Poissy (FR)
(72) Erfinder: EBERLE, Ulrich, 65428 Rüsselsheim am Main (DE); THIEM, Christoph, 65428 Rüsselsheim am Main (DE); WEBER, Nico, 65428 Rüsselsheim am Main (DE)
(74) Vertreter: ESIP
(86) Internationale Anmeldenummer: PCT/EP2023/055038
(87) Internationale Veröffentlichungsnummer: WO 2023/193996

(56) Entgegenhaltungen:
- US-A1- 2022 032 951
- SOLMAZ SELIM ET AL: "A Novel Testbench for Development, Calibration and Functional Testing of ADAS/AD Functions", 2019 IEEE INTERNATIONAL CONFERENCE ON CONNECTED VEHICLES AND EXPO (ICCVE), IEEE, 4 November 2019 (2019-11-04), pages 1 - 8, XP033692860, DOI: 10.1109/ICCVE45908.2019.8965225
- QIANWEN CHAO ET AL: "A Survey on Visual Traffic Simulation: Models, Evaluations, and Applications in Autonomous Driving", COMPUTER GRAPHICS FORUM : JOURNAL OF THE EUROPEAN ASSOCIATION FOR COMPUTER GRAPHICS, WILEY-BLACKWELL, OXFORD, vol. 39, no. 1, 15 July 2019 (2019-07-15), pages 287 - 308, XP071489753, ISSN: 0167-7055, DOI: 10.1111/CGF.13803
- CHEN YU ET AL: "Mixed Test Environment-based Vehicle-in-the-loop Validation - A New Testing Approach for Autonomous Vehicles", 2020 IEEE INTELLIGENT VEHICLES SYMPOSIUM (IV), IEEE, 19 October 2020 (2020-10-19), pages 1283 - 1289, XP033873286, DOI: 10.1109/IV47402.2020.9304658

## Beschreibung

Die Erfindung betrifft ein System zum Testen einer automatischen Fahrsteuerfunktion eines Testfahrzeugs, sowie ein Verfahren zum Testen einer automatischen Fahrsteuerfunktion eines Testfahrzeugs.

Simulationsumgebungen zur Simulation von Verkehrsteilnehmern sind bekannt.

Die DE 10 2019 219 241 A1 betrifft hierzu ein computerimplementiertes Verfahren zum Erstellen eines Verkehrsteilnehmeralgorithmus zur Computersimulation von Verkehrsteilnehmern, wobei die Verkehrsteilnehmer einer Klasse von schlecht geschützten Verkehrsteilnehmern angehören, wobei Daten einer Mehrzahl verschiedener, real existierender Verkehrsteilnehmer der Klasse in einer realen Verkehrsumgebung mithilfe von an den Verkehrsteilnehmern angebrachten Sensoren während der Durchführung wenigstens einer Mission erfasst werden, wobei aus den Daten Bewegungstrajektorien der Verkehrsteilnehmer ermittelt werden, wobei aus den Bewegungstrajektorien eine mittlere Bewegungstrajektorie für die Mission und Bandbreiten für Abweichungen von der mittleren Bewegungstrajektorie berechnet werden.

In dieser DE 10 2019 219 241 A1 werden insbesondere Bewegungstrajektorien von Vekehrsteilnehmern aufgezeichnet, wobei diese von Sensoren erfasst werden, die an den Verkehrsteilnehmern angebracht sind. Die beobachteten Verkehrsteilnehmer sind typischerweise Fußgänger, Motorradfahrer und Fahrradfahrer. Die aufgezeichneten Daten werden verwendet, um einen Algorithmus für das Steuergerät eines autonomen Fahrzeugs anzulernen. Dabei wird zum Anlernen eine Umgebung simuliert, welche auf realen Kartendaten basiert.

Mit jeder Simulation, wie beispielsweise in der DE 10 2019 219 241 A1 beschrieben, sind jedoch auch Ungenauigkeiten in der Abbildung der Realität unausweichlich vorhanden. Das simulationsbasierte Entwickeln und Testen automatisierter Fahrzeuge, insbesondere die Validierung einer Fahrsteuerungsfunktion für den automatischen Betrieb eines Fahrzeugs, ist jedoch nur möglich, wenn jeweilige Simulationsmodule nachweislich realitätsnahe Ergebnisse erzeugen. Dies betrifft unter anderem auch die Modellierung der Verkehrsdynamik, das heißt die Simulation des Verhaltens anderer Verkehrsteilnehmer. Eine realistische Abbildung der Umgebungsdynamik ist daher eine Schlüsselkomponente zum Auffinden potentiell kritischer Szenarien für ein automatisiertes Fahrzeug. Für die zukünftige Homologation z. B. nach NCAP wird zudem eine immer aufwändigere Testprozedur vorgeschrieben, die nur mit Hilfe von realitätsnahen Simulationsumgebungen erfolgreich durchgeführt werden kann.

Auch Fahrsteuerungsfunktionen können bekanntermaßen in eine Simulation eingebettet werden um diese beispielsweise zu verifizieren und zu validieren. Die US 2020/0353943 A1 betrifft hierzu ein System, womit Videodaten ermittelt werden, die eine Vogelperspektive von sich bewegenden Fahrzeugen zeigen. Ein Verkehrsszenario wird auf Basis dieser Daten erzeugt, wobei das Szenario Informationen über mindestens ein dynamisches Objekt aufweist. Ein Netzwerk zum maschinellen Lernen wird basierend auf dem Verkehrsszenario trainiert. Die Beschreibung der US 2020/0353943 A1 führt in diesem Zusammenhang eine Simulation einer dreidimensionalen Fahr-Umgebung an.

Die US 2020/192389 A1 offenbart ferner ein System zur Bildung einer künstlichen Intelligenz für ein autonomes Fahrzeug. Das System greift auf Bilder der realen Welt zu und generiert ein Bild eines simulierten Objekts in Übereinstimmung mit dem Real-Welt-Objekt. Es kann ein Übungsset von Bildern der realen Welt einschließlich der simulierten Objekte erstellt werden.

SOLMAZ SELIM ET AL: "A Novel Testbench for Development, Calibration and Functional Testing of ADAS/AD Functions", 2019 IEEE INTERNATIONAL CONFERENCE ON CONNECTED VEHICLES AND EXPO (ICCVE), IEEE, 4. November 2019 (2019-11-04), Seiten 1-8 beschreibt ein System zum Testen einer automatischen Fahrsteuerfunktion eines Testfahrzeugs, aufweisend eine Simulationsrecheneinheit, und ein reales Testfahrzeug außerhalb eines vordefinierten geographischen Gebiets, wobei die Simulationsrecheneinheit dazu ausgeführt ist, eine Verkehrssimulation in einem virtuellen Abbild des geographischen Gebiets und mit einem virtuellen Testfahrzeug als Abbild des realen Testfahrzeugs und mit virtuellen Verkehrsteilnehmern, und wobei die Simulationsrecheneinheit dazu ausgeführt ist, auf Basis der durchgeführten Verkehrssimulation, an die Eigenschaften von Sensoren des realen Testfahrzeugs angepasste, virtuelle Sensordaten in Echtzeit zu erzeugen und diese an eine Sensorschnittstelle des realen Testfahrzeugs zu übertragen.

Aufgabe der Erfindung ist es, das Testen einer automatischen Fahrsteuerfunktion mittels Verkehrssimulation zu verbessern, insbesondere durch optimale Nähe einer Verkehrssimulation zu realen Szenarien.

Die Erfindung ergibt sich aus den Merkmalen der unabhängigen Ansprüche. Vorteilhafte Weiterbildungen und Ausgestaltungen sind Gegenstand der abhängigen Ansprüche.

Ein erster Aspekt der Erfindung betrifft ein System zum Testen einer automatischen Fahrsteuerfunktion eines Testfahrzeugs, aufweisend eine Sensoranordnung zum Überwachen eines Verkehrsgeschehens in einem vordefinierten geographischen Gebiet, eine Simulationsrecheneinheit, und ein reales Testfahrzeug außerhalb des vordefinierten geographischen Gebiets, wobei die Sensoranordnung so zum vordefinierten geographischen Gebiet positioniert ist, um laufend Bewegungsbahnen von realen Verkehrsteilnehmern im geographischen Gebiet zu erfassen, und dazu ausgeführt ist, Daten über das Verkehrsgeschehen an die Simulationsrecheneinheit zu übermitteln, wobei die Simulationsrecheneinheit dazu ausgeführt ist, eine Verkehrssimulation in einem virtuellen Abbild des geographischen Gebiets und mit einem virtuellen Testfahrzeug als Abbild des realen Testfahrzeugs und mit virtuellen Verkehrsteilnehmern auszuführen, deren Bewegungsbahnen zumindest außerhalb eines vordefinierten Bereichs um das virtuelle Testfahrzeug den erfassten Bewegungsbahnen der realen Verkehrsteilnehmer entsprechen und innerhalb des vordefinierten Bereichs von den realen Bewegungsbahnen durch eine virtuelle Reaktion auf das virtuelle Testfahrzeug abweichen, und wobei die Simulationsrecheneinheit dazu ausgeführt ist, auf Basis der durchgeführten Verkehrssimulation, an die Eigenschaften von Sensoren des realen Testfahrzeugs angepasste, virtuelle Sensordaten in Echtzeit zu erzeugen und diese an eine Sensorschnittstelle des Testfahrzeugs zu übertragen, wobei das Testfahrzeug dazu ausgeführt ist, eine automatische Fahrsteuerfunktion auf Basis der virtuellen Sensordaten auszuführen, insbesondere während das Testfahrzeug auf einem von dem vordefinierten geographischen Gebiet entfernten Testgelände oder einem stationären Versuchsstand positioniert ist.

Die automatische Fahrsteuerfunktion des Testfahrzeugs dient insbesondere zum vollautomatischen oder autonomen Führen einer durch das Testfahrzeug repräsentierten Fahrzeugklasse. Eine solche Fahrsteuerfunktion weist daher typischerweise volle Autorität über die Funktionen des Gaspedals, des Bremspedals sowie der Lenkung auf. Insoweit ist die automatische Fahrsteuerfunktion sicherheitskritisch, als dass die Übernahme solcher Bedienelemente eines Fahrzeugs die Rolle der Fahrzeugführung einnimmt und dies somit die Verantwortung zur Vermeidung von Kollisionen mit anderen Verkehrsteilnehmern und anderen Objekten aus der Umgebung bedeutet.

Das vordefinierte geographische Gebiet wird insbesondere nach Kriterien gewählt, die zum Entwickeln, Testen, Validieren und Verifizieren einer automatischen Fahrsteuerfunktion besonders geeignet sind, das heißt typischerweise Besonderheiten aufweisen und Herausforderungen für die automatische Fahrsteuerfunktion darstellen, wie eine sehr belebte Kreuzung mit vielen Verkehrsteilnehmern, insbesondere mit komplexer Spurführung und unübersichtlichen situativen Gegebenheiten.

Das virtuelle Abbild des geographischen Gebiets basiert bevorzugt auf einer digitalen Karte, die die Verkehrswege und weitere für das Verkehrsgeschehen relevante Eigenheiten des vordefinierten geographischen Gebiets abbildet. Ferner umfassen die Daten über das Verkehrsgeschehen an die Simulationsrecheneinheit insbesondere die erfassten Bewegungsbahnen der realen Verkehrsteilnehmer im vordefinierten geographischen Gebiet.

Bevorzugt erfolgt eine Abweichung der Bewegungsbahn eines der virtuellen Verkehrsteilnehmer von der erfassten Bewegungsbahn seines realen Pendants nur dann, wenn das jeweilige in der Verkehrssimulation ausgeführte virtuelle Modell des virtuellen Verkehrsteilnehmers auch eine Reaktion auf das virtuelle Fahrzeug überhaupt erst ausgibt, wenn sich der virtuelle Verkehrsteilnehmer innerhalb des bzw. am Übergang zum vordefinierten Bereich um das virtuelle Testfahrzeug befindet.

Mögliche Sensoren an Fahrzeugen einer Fahrzeugklasse, wie sie durch das Testfahrzeug repräsentiert wird, sind beispielsweise eine oder mehrere Kameraeinheiten, Radar, Lidar, Thermalsensor, Ultraschallsensor, etc.; das Erzeugen der virtuellen Sensordaten aus der durchgeführten Verkehrssimulation in Echtzeit bedeutet, dass eine vergehende Sekunde in der Verkehrssimulation auch zu virtuellen Sensordaten mit einer Sekunde Länge führen. Dies ist insofern entscheidend, als dass die Simulationsrecheneinheit praktikabler Weise deutlich mehr potentielle Rechenleistung anbietet, als zum Ausführen der Verkehrssimulation tatsächlich benötigt werden, um sicherzustellen, dass für alle simulierten denkbaren Szenarien ausreichend Rechenleistung zur Verfügung steht, um auch eine online Ausführung der Simulation parallel zum Echtzeitgeschehen zu erlauben, sodass beispielsweise zur selben Tageszeit und mit einem geringen zeitlichen Versatz von beispielsweise einer halben Sekunde nachgelagert zum realen Verkehrsgeschehen die Verkehrssimulation erfolgt. Die Verkehrssimulation ist daher von ihrer technisch größtmöglichen Ausführungsrate auf die Echtzeitrate zu drosseln, wie dies beispielsweise von Flugsimulatoren oder Fahrsimulatoren für Testfahrer bekannt ist.

Diese Ausgabe der Sensordaten in Echtzeit bezüglich der Verkehrssimulation ist zu unterscheiden von einer weiter unten genannten Ausführungsform der Einspeisung der von der Sensoranordnung erfassten Daten über das Verkehrsgeschehen in Echtzeit in die Verkehrssimulation, wobei Letzteres dazu führt, dass die Verkehrssimulation nahezu zeitgleich zum echten Verkehrsgeschehen erfolgt.

Es kann jedoch auch in einer Datenbank eine Zwischenspeicherung erfolgen für die Daten der Sensoranordnung, um diese dann in der Verkehrssimulation zu einem beliebig späteren Zeitpunkt auszuführen, die dann in Echtzeit wie oben beschrieben ausgeführt wird, um für die reale Zeit am Testfahrzeug zeitlich passend ausgegeben zu werden.

Die Sensoranordnung weist bevorzugt mehrere Sensoren auf, besonders bevorzugt aber eine hochauflösende Kamera oberhalb des Verkehrsgeschehens, beispielsweise an einem unbemannten Luftfahrzeug. Weiterhin bevorzugt werden Kameras in weiteren Perspektiven angeordnet, insbesondere dann, wenn das vordefinierte geographische Gebiet verzweigt ist, viele Verkehrsteilnehmer zu erwarten sind, Hindernisse die Sicht auf einen anderen Sensor versperren, oder andere spezielle Eigenheiten des zu beobachtenden geographischen Gebiets die Verwendung mehrerer Sensoren wie Kameras nahelegen.

Die Verwendung einer solchen Sensoranordnung zum Beobachten eines realen vordefinierten geographischen Gebiets liefert vorteilhaft sogenannte "Ground Truth" Daten, welche nicht in Computermodellen simuliert werden müssen. Es wird vorteilhaft somit die Zahl und der Einsatzbereich von computerbasierten Agentenmodellen zumindest bis außerhalb des vordefinierten Bereichs um das Testfahrzeug soweit minimiert, dass lediglich im unmittelbaren Nahbereich des Testfahrzeugs virtuelle Agentenmodelle zum Simulieren des Verhaltens anderer Verkehrsteilnehmer als Reaktion auf das Verhalten des eigenen Testfahrzeugs notwendig werden.

Das Simulieren der Verhalten der Verkehrsteilnehmer zumindest im Nahbereich um das Testfahrzeug ist daher nötig, da das Testfahrzeug nicht im realen vordefinierten geographischen Gebiet vorhanden ist, sodass eine tatsächliche Reaktion realer Verkehrsteilnehmer auf das Verhalten des Testfahrzeug nicht erfolgen kann. Dieser Umstand ist Zwecken der Sicherheit geschuldet, da das erfindungsgemäße System insbesondere zum Testen der automatischen Fahrsteuerfunktion verwendet wird. Insbesondere in einem Entwicklungsstadium wie zum Entwickeln, Testen, Verifizieren und Validieren einer solchen automatischen Fahrsteuerfunktion ist der Schutz realer Verkehrsteilnehmer geboten.

Das erfindungsgemäße System nutzt also zum Testen der automatischen Fahrsteuerfunktion am Testfahrzeug so viele wie mögliche Daten über das Verhalten realer Verkehrsteilnehmer insbesondere in Form deren Bewegungsbahnen, und ersetzt die Bewegungsbahnen realer Verkehrsteilnehmer nur dann durch die virtueller Agentenmodelle, wo mit sehr großer Wahrscheinlichkeit eine Reaktion des Verkehrsteilnehmers auf das Verhalten des Testfahrzeug zu erwarten wäre, wäre dieses tatsächlich im realen vordefinierten geographischen Gebiet vorhanden.

Dennoch sind die Verhalten der virtuellen Verkehrsteilnehmer nicht gänzlich von der Realität losgelöst, sondern werden im Übergang vom Äußeren zum Inneren in Form einer Stützung (im Falle eines kontinuierlichen Übergangs, das heißt einer Stützung der virtuellen Bewegungsbahnen durch die realen Bewegungsbahnen) bzw. im Sinne einer initialen Randbedingung (im Falle eines diskreten Übergangs und plötzlichen Sprungs zwischen der Verwendung der realen Bewegungsbahnen und der die realen ersetzenden virtuellen Bewegungsbahnen der anderen Verkehrsteilnehmer) immer zumindest anfänglich auf Basis realer Daten erzeugt.

Es ist daher eine vorteilhafte Wirkung der Erfindung, dass zum Testen einer automatischen Fahrsteuerfunktion eines Testfahrzeugs durch die Verwendung der Verkehrssimulation und der Auslagerung des Testfahrzeugs auf einen Versuchsstand oder ein abgesperrtes Testgelände Kollisionen mit realen Verkehrsteilnehmern in einem insbesondere öffentlich zugänglichen vordefinierten geographischen Gebiet ausgeschlossen werden. Fehlfunktionen der automatischen Fahrsteuerfunktion oder unerwünschtes Verhalten führt damit zu keinen Beeinträchtigungen des Verkehrsgeschehens im vordefinierten geographischen Gebiet. Da jedoch in einer rein virtuellen Verkehrssimulation die virtuellen Modelle realer Verkehrsteilnehmer immer nur näherungsweise das Verhalten realer Verkehrsteilnehmer abbilden können, wird vorteilhaft gemäß dem erfindungsgemäßen System zu großen Teilen auf die in der Realität erfassten Daten zum realen Verkehrsgeschehen zurückgegriffen, um den Realitätsgrad der Verkehrssimulation erheblich zu steigern. Durch die Beobachtung einer vorab gewählten Situation in einem entsprechenden vordefinierten geographischen Gebiet kann damit an einem beliebig weit entfernt liegenden Ort vom vordefinierten geographischen Gebiet das Testfahrzeug getestet und ausgelegt werden, bis hin zur abschließenden Verifizierung und Validierung der automatischen Fahrsteuerfunktion. Insbesondere da starke Abweichungen in situativen Gegebenheiten sowie den Verhalten von weiteren Verkehrsteilnehmern über verschiedene Kulturen und häufig auch innerhalb einzelner Staaten bestehen, kann somit eine Vielzahl von Eigenheiten von einzelnen Gebieten gleichermaßen sicher aus der Entfernung getestet werden. Ferner können vorteilhaft in den virtuellen Sensordaten für die realen Sensoren des Testfahrzeugs reale Effekte simuliert und überlagert werden, beispielsweise Sensorrauschen oder bewusst verfälschte Sensordaten wie durch Sensor-Spoofing bei aktiv ausgeführten Angriffen von außen. Das erfindungsgemäße System eignet sich somit über eine breite Bandbreite von Anwendungen, beginnend mit Auslegung und Training von entsprechenden Algorithmen der automatischen Fahrsteuerfunktion wie künstlichen neuronalen Netzen, über das Testen von bereits ausgelegten Algorithmen der automatischen Fahrsteuerfunktion bis hin zum abschließenden Verifizieren und Validieren.

Gemäß einer vorteilhaften Ausführungsform ist die Sensoranordnung dazu ausgeführt, den jeweils aktuellen Schaltzustand von Ampeln innerhalb des vordefinierten geographischen Gebiets an die Simulationsrecheneinheit zu übertragen.

Gemäß einer weiteren vorteilhaften Ausführungsform umfasst die Sensoranordnung ein unbemanntes Luftfahrzeug zum Überwachen des vordefinierten geographischen Gebiets von oberhalb.

Gemäß einer weiteren vorteilhaften Ausführungsform können aktuelle Daten über das Verkehrsgeschehen in dem vordefinierten geographischen Gebiet laufend an die Simulationsrecheneinheit übertragen werden, wobei die Simulationsrecheneinheit dazu ausgeführt ist, die ausgeführte Verkehrssimulation in Echtzeit relativ zu den übertragenen Daten über das Verkehrsgeschehen auszuführen.

Gemäß einer weiteren vorteilhaften Ausführungsform ist die Simulationsrecheneinheit dazu ausgeführt, laufend eine Relevanz-Metrik und/oder Kritikalität-Metrik der Fahrsteuerfunktion zu überwachen und bei Überschreiten eines Grenzwerts in der Relevanz-Metrik und/oder der Kritikalität-Metrik die aktuellen und in einem vordefinierten Zeitraum vergangenen virtuellen Sensordaten und/oder Daten über das Verkehrsgeschehen der Sensoranordnung, sowie das virtuelle Abbild des realen vordefinierten Gebiets in einer dedizierten Datenbank abzuspeichern.

Als Relevanz-Metrik und/oder Kritikalität-Metrik kann beispielsweise die "Time-to-Collision", also das Unterschreiten einer Zeit bis zu einem Aufprall mit einem weiteren Verkehrsteilnehmer, verwendet werden. Die dedizierte Datenbank bietet daher eine Quelle für weitere Hersteller von Fahrzeugen und Forschungseinrichtungen, die besonders kritischen Situationen zum Testen und Auslegen ihrer Fahrzeuge zu verwenden.

Gemäß einer weiteren vorteilhaften Ausführungsform ist die Simulationsrecheneinheit dazu ausgeführt, einen zusätzlichen virtuellen Verkehrsteilnehmer ohne reales Pendant innerhalb des vordefinierten Bereichs um das virtuelle Testfahrzeug zu erzeugen und ein Verhalten des virtuellen Verkehrsteilnehmers zu simulieren.

Der zusätzliche virtuelle Verkehrsteilnehmer spiegelt bevorzugt besonders schwieriges Verhalten in Bezug auf die automatische Fahrsteuerfunktion wider, beispielsweise ein Fußgänger mit schwer interpretierbarem Verhalten.

Gemäß einer weiteren vorteilhaften Ausführungsform ist die Simulationsrecheneinheit dazu ausgeführt, die von der Sensoranordnung erfassten realen Verkehrsteilnehmer in vorgegebene Kategorien einzuteilen und auf Basis der Einteilung die Verkehrssimulation durchzuführen.

Solche Kategorien sind beispielsweise (aber nicht abschließend): Fußgänger, Fahrradfahrer, Personenkraftwagen, Lastkraftwagen, Busse.

Gemäß einer weiteren vorteilhaften Ausführungsform ist die Simulationsrecheneinheit dazu ausgeführt, in der Verkehrssimulation Bewegungsbahnen der virtuellen Verkehrsteilnehmer außerhalb des vordefinierten Bereichs um das virtuelle Testfahrzeug ausschließlich aus den Bewegungsbahnen der realen Verkehrsteilnehmer zu erzeugen, und mit dem Überschreiten der Bewegungsbahnen der jeweiligen virtuellen Verkehrsteilnehmer über die Grenze ins Innere des vordefinierten Bereichs die Bewegungsbahnen der virtuellen Verkehrsteilnehmer ausschließlich virtuell zu erzeugen.

Gemäß einer weiteren vorteilhaften Ausführungsform ist die Simulationsrecheneinheit dazu ausgeführt, in der Verkehrssimulation Bewegungsbahnen der virtuellen Verkehrsteilnehmer außerhalb des vordefinierten Bereichs um das virtuelle Testfahrzeug ausschließlich aus den Bewegungsbahnen der realen Verkehrsteilnehmer zu erzeugen, und kontinuierlich mit dem Überschreiten der Bewegungsbahnen der jeweiligen virtuellen Verkehrsteilnehmer über die Grenze ins Innere des vordefinierten Bereichs auf den Bewegungsbahnen der realen Verkehrsteilnehmer zu basieren und mit zunehmender Annäherung an das virtuelle Testfahrzeug mit erhöhter Intensität einer Reaktion auf das virtuelle Testfahrzeug zu erzeugen.

Ein weiterer Aspekt der Erfindung betrifft ein Verfahren zum Testen einer automatischen Fahrsteuerfunktion eines Testfahrzeugs, aufweisend die Schritte:
- Überwachen eines Verkehrsgeschehens in einem vordefinierten geographischen Gebiet durch eine Sensoranordnung, wobei die Sensoranordnung so zum vordefinierten geographischen Gebiet positioniert ist, um laufend Bewegungsbahnen von realen Verkehrsteilnehmern im geographischen Gebiet zu erfassen,
- Übermitteln von Daten über das Verkehrsgeschehen an eine Simulationsrecheneinheit durch die Sensoranordnung,
- Ausführen einer Verkehrssimulation, durch die Simulationsrecheneinheit, in einem virtuellen Abbild des geographischen Gebiets und mit einem virtuellen Testfahrzeug als Abbild eines außerhalb des vordefinierten geographischen Gebiets gelegenen realen Testfahrzeugs und mit virtuellen Verkehrsteilnehmern, deren Bewegungsbahnen zumindest außerhalb eines vordefinierten Bereichs um das virtuelle Testfahrzeug den erfassten Bewegungsbahnen der realen Verkehrsteilnehmer entsprechen und innerhalb des vordefinierten Bereichs von den realen Bewegungsbahnen durch eine virtuelle Reaktion auf das virtuelle Testfahrzeug abweichen,
- Erzeugen von an die Eigenschaften von Sensoren des realen Testfahrzeugs angepassten virtuellen Sensordaten in Echtzeit durch die Simulationsrecheneinheit auf Basis der durchgeführten Verkehrssimulation und Übertragen dieser an eine Sensorschnittstelle des Testfahrzeugs, und
- Ausführen einer automatischen Fahrsteuerfunktion auf Basis der virtuellen Sensordaten durch das Testfahrzeug, insbesondere während das Testfahrzeug auf einem von dem vordefinierten geographischen Gebiet entfernten Testgelände oder einem stationären Versuchsstand positioniert ist.

Vorteile und bevorzugte Weiterbildungen des vorgeschlagenen Verfahrens ergeben sich durch eine analoge und sinngemäße Übertragung der im Zusammenhang mit dem vorgeschlagenen System vorstehend gemachten Ausführungen.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigen:
- Fig. 1:: Ein System zum Testen einer automatischen Fahrsteuerfunktion eines Testfahrzeugs gemäß einem Ausführungsbeispiel der Erfindung.
- Fig. 2:: Ein entsprechendes Verfahren zum Ausführungsbeispiel der Erfindung nach Fig. 1.

Die Darstellungen in den Figuren sind schematisch und nicht maßstäblich.

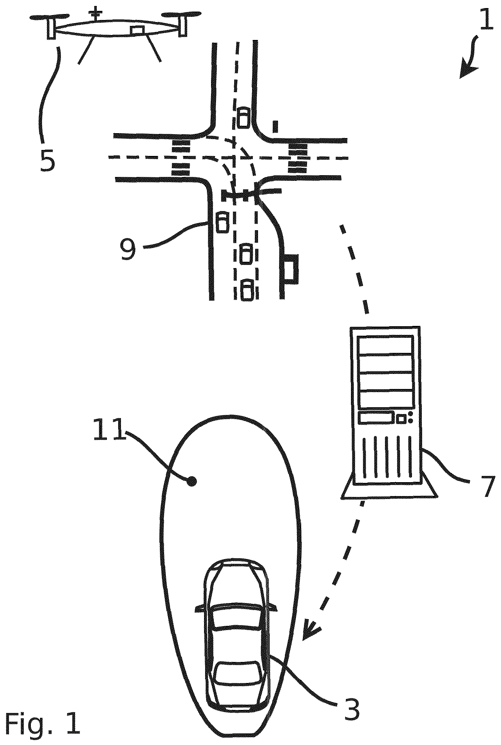

Fig. 1 zeigt ein System 1 zum Testen einer automatischen Fahrsteuerfunktion eines Testfahrzeugs 3, welches eine Klasse von Fahrzeugen für den Straßenverkehr repräsentiert, sodass die automatische Fahrsteuerfunktion nach dem erfolgreichen Testen in Fahrzeugen aus Serienfertigung im Straßenverkehr eingesetzt werden kann. Das System weist eine Sensoranordnung 5 zum Überwachen eines Verkehrsgeschehens in einem vordefinierten geographischen Gebiet um eine Innenstadtkreuzung, eine Simulationsrecheneinheit 7, und ein reales Testfahrzeug 3 außerhalb des vordefinierten geographischen Gebiets auf einem abgeschlossenen Testgelände auf. Die Sensoranordnung 5 umfasst neben einer Kamera auf Augenhöhe an der Kreuzung ein unbemanntes Luftfahrzeug mit einer Kamera, die so zum vordefinierten geographischen Gebiet positioniert ist, um laufend Bewegungsbahnen von realen Verkehrsteilnehmern 9 im geographischen Gebiet zu erfassen. Daten über das Verkehrsgeschehen einschließlich der Bewegungsbahnen der realen Verkehrsteilnehmer auf der Kreuzung werden an die Simulationsrecheneinheit 7 übermittelt. Diese Simulationsrecheneinheit 7 wiederum führt eine Verkehrssimulation in einem virtuellen Abbild des geographischen Gebiets mit einer digitalen Karte, und mit einem virtuellen Testfahrzeug 3 als Abbild des realen Testfahrzeugs 3 und mit virtuellen Verkehrsteilnehmern aus, deren Bewegungsbahnen zumindest außerhalb eines vordefinierten Bereichs 11 um das virtuelle Testfahrzeug 3 den erfassten Bewegungsbahnen der realen Verkehrsteilnehmer 9 entsprechen und innerhalb des vordefinierten Bereichs 11 von den realen Bewegungsbahnen durch eine virtuelle Reaktion auf das virtuelle Testfahrzeug 3 abweichen. Der Bereich 11 um das virtuelle Testfahrzeug ist wie in Fig. 1 zu sehen zur Front des virtuellen Testfahrzeugs größer ausgebildet, da im Frontbereich vor dem Fahrzeug die Reaktionen der Verkehrsteilnehmer auf das Fahrzeug zu erwarten sind, als hinter dem Fahrzeug. Die Simulationsrecheneinheit 7 erzeugt auf Basis der durchgeführten Verkehrssimulation an die Eigenschaften von Sensoren des realen Testfahrzeugs 3 angepasste virtuelle Sensordaten in Echtzeit für die Sensoren des Testfahrzeugs 3 und übermittelt diese an eine Sensorschnittstelle des Testfahrzeugs 3, sodass an Stelle der echten Sensorsignale der Sensoren des Testfahrzeugs 3 die virtuellen Sensordaten, erzeugt durch die Verkehrssimulation, treten. Das Testfahrzeug 3 führt damit eine automatische Fahrsteuerfunktion aus, jedoch während das Testfahrzeug 3 auf einem von dem vordefinierten geographischen Gebiet entfernten Testgelände oder einem stationären Versuchsstand positioniert ist.

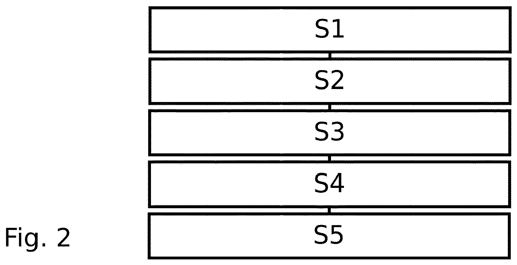

Fig. 2 zeigt ein zum System 1 der Fig. 1 zugehöriges Verfahren zum Testen einer automatischen Fahrsteuerfunktion eines Testfahrzeugs 3, aufweisend die Schritte:
- Überwachen S1 eines Verkehrsgeschehens in einem vordefinierten geographischen Gebiet durch eine Sensoranordnung 5, wobei die Sensoranordnung 5 so zum vordefinierten geographischen Gebiet positioniert ist, um laufend Bewegungsbahnen von realen Verkehrsteilnehmern 9 im geographischen Gebiet zu erfassen,
- Übermitteln S2 von Daten über das Verkehrsgeschehen an eine Simulationsrecheneinheit 7 durch die Sensoranordnung 5,
- Ausführen S3 einer Verkehrssimulation, durch die Simulationsrecheneinheit 7, in einem virtuellen Abbild des geographischen Gebiets und mit einem virtuellen Testfahrzeug 3 als Abbild eines außerhalb des vordefinierten geographischen Gebiets gelegenen realen Testfahrzeugs 3 und mit virtuellen Verkehrsteilnehmern, deren Bewegungsbahnen zumindest außerhalb eines vordefinierten Bereichs 11 um das virtuelle Testfahrzeug 3 den erfassten Bewegungsbahnen der realen Verkehrsteilnehmer 9 entsprechen und innerhalb des vordefinierten Bereichs 11 von den realen Bewegungsbahnen durch eine virtuelle Reaktion auf das virtuelle Testfahrzeug 3 abweichen,
- Erzeugen S4 von an die Eigenschaften von Sensoren des realen Testfahrzeugs 3 angepassten virtuellen Sensordaten in Echtzeit durch die Simulationsrecheneinheit 7 auf Basis der durchgeführten Verkehrssimulation und Übertragen dieser an eine Sensorschnittstelle des Testfahrzeugs 3, und
- Ausführen S5 einer automatischen Fahrsteuerfunktion auf Basis der virtuellen Sensordaten durch das Testfahrzeug 3, insbesondere während das Testfahrzeug 3 auf einem von dem vordefinierten geographischen Gebiet entfernten Testgelände oder einem stationären Versuchsstand positioniert ist.

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen, beispielsweise hinsichtlich der Funktion oder der Anordnung einzelner, in einer beispielhaften Ausführungsform genannter Elemente, vornehmen kann, ohne den Schutzbereich zu verlassen, der durch die Ansprüche definiert wird.

### Bezugszeichenliste

- 1: System
- 3: Testfahrzeug
- 5: Sensoranordnung
- 7: Simulationsrecheneinheit
- 9: Verkehrsteilnehmer
- 11: vordefinierter Bereich

- S1: Überwachen
- S2: Übermitteln
- S3: Ausführen
- S4: Erzeugen
- S5: Ausführen

## Patentansprüche

1. System (1) zum Testen einer automatischen Fahrsteuerfunktion eines Testfahrzeugs (3), aufweisend eine Sensoranordnung (5) zum Überwachen eines Verkehrsgeschehens in einem vordefinierten geographischen Gebiet, eine Simulationsrecheneinheit (7), und ein reales Testfahrzeug (3) außerhalb des vordefinierten geographischen Gebiets, wobei die Sensoranordnung (5) so zum vordefinierten geographischen Gebiet positioniert ist, um laufend Bewegungsbahnen von realen Verkehrsteilnehmern (9) im geographischen Gebiet zu erfassen, und dazu ausgeführt ist, Daten über das Verkehrsgeschehen an die Simulationsrecheneinheit (7) zu übermitteln, wobei die Simulationsrecheneinheit (7) dazu ausgeführt ist, eine Verkehrssimulation in einem virtuellen Abbild des geographischen Gebiets und mit einem virtuellen Testfahrzeug als Abbild des realen Testfahrzeugs (3) und mit virtuellen Verkehrsteilnehmern auszuführen, deren Bewegungsbahnen zumindest außerhalb eines vordefinierten Bereichs (11) um das virtuelle Testfahrzeug den erfassten Bewegungsbahnen der realen Verkehrsteilnehmer (9) entsprechen und innerhalb des vordefinierten Bereichs (11) von den realen Bewegungsbahnen durch eine virtuelle Reaktion auf das virtuelle Testfahrzeug abweichen, und wobei die Simulationsrecheneinheit (7) dazu ausgeführt ist, auf Basis der durchgeführten Verkehrssimulation, an die Eigenschaften von Sensoren des realen Testfahrzeugs (3) angepasste, virtuelle Sensordaten in Echtzeit zu erzeugen und diese an eine Sensorschnittstelle des realen Testfahrzeugs (3) zu übertragen, wobei das reale Testfahrzeug (3) dazu ausgeführt ist, eine automatische Fahrsteuerfunktion auf Basis der virtuellen Sensordaten auszuführen.

2. System (1) nach Anspruch 1,
wobei die Sensoranordnung (5) dazu ausgeführt ist, den jeweils aktuellen Schaltzustand von Ampeln innerhalb des vordefinierten geographischen Gebiets an die Simulationsrecheneinheit (7) zu übertragen.

3. System (1) nach einem der vorhergehenden Ansprüche,
wobei die Sensoranordnung (5) ein unbemanntes Luftfahrzeug zum Überwachen des vordefinierten geographischen Gebiets von oberhalb umfasst.

4. System (1) nach einem der vorhergehenden Ansprüche,
wobei aktuelle Daten über das Verkehrsgeschehen in dem vordefinierten geographischen Gebiet laufend an die Simulationsrecheneinheit (7) übertragen werden können, wobei die Simulationsrecheneinheit (7) dazu ausgeführt ist, die ausgeführte Verkehrssimulation in Echtzeit relativ zu den übertragenen Daten über das Verkehrsgeschehen auszuführen.

5. System (1) nach einem der vorhergehenden Ansprüche,
wobei die Simulationsrecheneinheit (7) dazu ausgeführt ist, laufend eine Relevanz-Metrik und/oder Kritikalität-Metrik der Fahrsteuerfunktion zu überwachen und bei Überschreiten eines Grenzwerts in der Relevanz-Metrik und/oder der Kritikalität-Metrik die aktuellen und in einem vordefinierten Zeitraum vergangenen virtuellen Sensordaten und/oder Daten über das Verkehrsgeschehen der Sensoranordnung (5), sowie das virtuelle Abbild des realen vordefinierten Gebiets in einer dedizierten Datenbank abzuspeichern.

6. System (1) nach einem der vorhergehenden Ansprüche,
wobei die Simulationsrecheneinheit (7) dazu ausgeführt ist, einen zusätzlichen virtuellen Verkehrsteilnehmer ohne reales Pendant innerhalb des vordefinierten Bereichs (11) um das virtuelle Testfahrzeug zu erzeugen und ein Verhalten des virtuellen Verkehrsteilnehmers zu simulieren.

7. System (1) nach einem der vorhergehenden Ansprüche,
wobei die Simulationsrecheneinheit (7) dazu ausgeführt ist, die von der Sensoranordnung (5) erfassten realen Verkehrsteilnehmer (9) in vorgegebene Kategorien einzuteilen und auf Basis der Einteilung die Verkehrssimulation durchzuführen.

8. System (1) nach einem der Ansprüche 1 bis 7,
wobei die Simulationsrecheneinheit (7) dazu ausgeführt ist, in der Verkehrssimulation Bewegungsbahnen der virtuellen Verkehrsteilnehmer außerhalb des vordefinierten Bereichs (11) um das virtuelle Testfahrzeug ausschließlich aus den Bewegungsbahnen der realen Verkehrsteilnehmer zu erzeugen, und mit dem Überschreiten der Bewegungsbahnen der jeweiligen virtuellen Verkehrsteilnehmer über die Grenze ins Innere des vordefinierten Bereichs (11) die Bewegungsbahnen der virtuellen Verkehrsteilnehmer ausschließlich virtuell zu erzeugen.

9. System (1) nach einem der Ansprüche 1 bis 7,
wobei die Simulationsrecheneinheit (7) dazu ausgeführt ist, in der Verkehrssimulation Bewegungsbahnen der virtuellen Verkehrsteilnehmer außerhalb des vordefinierten Bereichs (11) um das virtuelle Testfahrzeug ausschließlich aus den Bewegungsbahnen der realen Verkehrsteilnehmer zu erzeugen, und kontinuierlich mit dem Überschreiten der Bewegungsbahnen der jeweiligen virtuellen Verkehrsteilnehmer über die Grenze ins Innere des vordefinierten Bereichs (11) auf den Bewegungsbahnen der realen Verkehrsteilnehmer zu basieren und mit zunehmender Annäherung an das virtuelle Testfahrzeug mit erhöhter Intensität einer Reaktion auf das virtuelle Testfahrzeug zu erzeugen.

10. Verfahren zum Testen einer automatischen Fahrsteuerfunktion eines Testfahrzeugs (3), aufweisend die Schritte:
- Überwachen (S1) eines Verkehrsgeschehens in einem vordefinierten geographischen Gebiet durch eine Sensoranordnung (5), wobei die Sensoranordnung (5) so zum vordefinierten geographischen Gebiet positioniert ist, um laufend Bewegungsbahnen von realen Verkehrsteilnehmern (9) im geographischen Gebiet zu erfassen,
- Übermitteln (S2) von Daten über das Verkehrsgeschehen an eine Simulationsrecheneinheit (7) durch die Sensoranordnung (5),
- Ausführen (S3) einer Verkehrssimulation, durch die Simulationsrecheneinheit (7), in einem virtuellen Abbild des geographischen Gebiets und mit einem virtuellen Testfahrzeug als Abbild eines außerhalb des vordefinierten geographischen Gebiets gelegenen realen Testfahrzeugs (3) und mit virtuellen Verkehrsteilnehmern, deren Bewegungsbahnen zumindest außerhalb eines vordefinierten Bereichs (11) um das virtuelle Testfahrzeug den erfassten Bewegungsbahnen der realen Verkehrsteilnehmer (9) entsprechen und innerhalb des vordefinierten Bereichs (11) von den realen Bewegungsbahnen durch eine virtuelle Reaktion auf das virtuelle Testfahrzeug abweichen,
- Erzeugen (S4) von an die Eigenschaften von Sensoren des realen Testfahrzeugs (3) angepassten virtuellen Sensordaten in Echtzeit durch die Simulationsrecheneinheit (7) auf Basis der durchgeführten Verkehrssimulation und Übertragen dieser an eine Sensorschnittstelle des realen Testfahrzeugs (3), und
- Ausführen (S5) einer automatischen Fahrsteuerfunktion auf Basis der virtuellen Sensordaten durch das reale Testfahrzeug (3).

## Claims

1. System (1) for testing an automatic driving control function of a test vehicle (3), comprising a sensor arrangement (5) for monitoring a traffic event in a predefined geographical area, a simulation computing unit (7), and a real test vehicle (3) outside the predefined geographical area, wherein the sensor arrangement (5) is positioned to the predefined geographical area in such a way as to continuously detect movement paths of real traffic participants (9) in the geographical area and is designed to transmit data on the traffic event to the simulation computing unit (7), wherein the simulation computing unit (7) is designed to carry out a traffic simulation in a virtual image of the geographical area and with a virtual test vehicle as an image of the real test vehicle (3) and with virtual traffic participants whose movement paths at least outside a predefined area (11) around the Test vehicle correspond to the detected movement paths of the real road users (9) and deviate from the real movement paths within the predefined range (11) by a virtual reaction to the virtual test vehicle, and wherein the simulation computer unit (7) is designed to generate virtual sensor data adapted to the properties of sensors of the real test vehicle (3) in real time on the basis of the traffic simulation carried out and to transmit this to a sensor interface of the real test vehicle (3), wherein the real test vehicle (3) is designed to carry out an automatic driving control function on the basis of the virtual sensor data.

2. System (1) according to claim 1,
wherein the sensor arrangement (5) is designed to transmit the current switching state of traffic lights within the predefined geographical area to the simulation computer unit (7).

3. System (1) according to any one of the preceding claims,
wherein the sensor arrangement (5) comprises an unmanned aircraft for monitoring the predefined geographical area from above.

4. System (1) according to any one of the preceding claims,
current data on the traffic situation in the predefined geographical area can be continuously transmitted to the simulation computing unit (7), the simulation computing unit (7) being designed to execute the executed traffic simulation in real time relative to the transmitted data on the traffic situation.

5. System (1) according to any one of the preceding claims,
The simulation computing unit (7) is designed to continuously monitor a relevance metric and/or criticality metric of the drive control function and, when a limit value in the relevance metric and/or the criticality metric is exceeded, to store the current virtual sensor data and/or data about the traffic situation of the sensor arrangement (5) which have passed in a predefined period of time, and the virtual image of the real predefined area in a dedicated database.

6. System (1) according to any one of the preceding claims,
wherein the simulation computing unit (7) is designed to generate an additional virtual traffic participant without a real counterpart within the predefined area (11) around the virtual test vehicle and to simulate a behaviour of the virtual traffic participant.

7. System (1) according to any one of the preceding claims,
the simulation computer unit (7) is designed to divide the real road users (9) detected by the sensor arrangement (5) into predetermined categories and to carry out the traffic simulation on the basis of the division.

8. System (1) according to any one of claims 1 to 7,
wherein the simulation computer unit (7) is designed to generate movement paths of the virtual road users outside the predefined area (11) in the traffic simulation in order to generate the virtual test vehicle exclusively from the movement paths of the real road users, and to generate the movement paths of the virtual road users exclusively virtually when the movement paths of the respective virtual road users cross the boundary into the interior of the predefined area (11).

9. System (1) according to any one of claims 1 to 7,
wherein the simulation computer unit (7) is designed to generate movement paths of the virtual road users outside the predefined area (11) in the traffic simulation in order to generate the virtual test vehicle exclusively from the movement paths of the real road users, and to be based continuously on the movement paths of the real road users when the movement paths of the respective virtual road users cross the boundary into the interior of the predefined area (11) and to generate a reaction to the virtual test vehicle with increased intensity as the approach to the virtual test vehicle increases.

10. Method for testing an automatic driving control function of a test vehicle (3), comprising the steps of:
- Monitoring (S1) of a traffic event in a predefined geographical area by means of a sensor arrangement (5), the sensor arrangement (5) being positioned relative to the predefined geographical area in such a way as to continuously detect movement paths of real road users (9) in the geographical area,
- Transmission (S2) of traffic data to a simulation computer unit (7) by the sensor arrangement (5),
- Execution (S3) of a traffic simulation by the simulation computer unit (7) in a virtual image of the geographical area and with a virtual test vehicle as an image of a real test vehicle (3) located outside the predefined geographical area and with virtual road users whose movement paths correspond at least outside a predefined region (11) around the virtual test vehicle to the detected movement paths of the real road users (9) and deviate from the real movement paths within the predefined region (11) by a virtual reaction to the virtual test vehicle,
- Generation (S4) in real time by the simulation computer unit (7) of virtual sensor data adapted to the properties of sensors of the real test vehicle (3) on the basis of the traffic simulation carried out and transmission thereof to a sensor interface of the real test vehicle (3), and
- Execution (S5) of an automatic driving control function based on the virtual sensor data by the real test vehicle (3).

## Revendications

1. Système (1) pour tester une fonction de commande automatique de conduite d'un véhicule d'essai (3), comprenant un dispositif de capteur (5) pour surveiller un événement de circulation dans une zone géographique prédéfinie, une unité de calcul de simulation (7), et un véhicule d'essai réel (3) en dehors de la zone géographique prédéfinie, le dispositif de capteur (5) étant positionné par rapport à la zone géographique prédéfinie pour détecter en continu des trajectoires de circulation d'usagers de la circulation réels (9) dans la zone géographique et étant conçu pour transmettre des données sur l'événement de circulation à l'unité de calcul de simulation (7), l'unité de calcul de simulation (7) est conçu pour effectuer une simulation de trafic dans une image virtuelle de la zone géographique et avec un véhicule d'essai virtuel comme image du véhicule d'essai réel (3) et avec des participants de trafic virtuel dont les trajectoires de déplacement correspondent au moins à l'extérieur d'une zone prédéfinie (11) autour du véhicule d'essai virtuel aux trajectoires de déplacement détectées des participants de trafic réel (9) et s'écartent des trajectoires de déplacement réel à l'intérieur de la zone prédéfinie (11) par une réponse virtuelle au véhicule d'essai virtuel, et l'unité de calcul de simulation (7) est conçue pour, sur la base de la simulation de trafic effectuée, aux caractéristiques des capteurs du véhicule d'essai réel (3) Générer des données de capteur virtuel adaptées en temps réel et les transmettre à une interface de capteur du véhicule d'essai réel (3), le véhicule d'essai réel (3) étant conçu pour exécuter une fonction de commande de conduite automatique sur la base des données de capteur virtuel.

2. Système (1) selon la revendication 1,l'agencement de capteurs (5) est conçu pour transmettre l'état de commutation actuel des feux à l'intérieur de la zone géographique prédéfinie à l'unité de calcul de simulation (7).

3. Système (1) selon l'une quelconque des revendications précédentes, l'ensemble capteur (5) comprend un aéronef sans équipage à bord pour surveiller la zone géographique prédéfinie depuis le dessus.

4. Système (1) selon l'une quelconque des revendications précédentes, des données actuelles sur le trafic dans la zone géographique prédéfinie peuvent être transmises en continu à l'unité de calcul de simulation (7), l'unité de calcul de simulation (7) étant conçue pour exécuter la simulation de trafic exécutée en temps réel par rapport aux données transmises sur le trafic.

5. Système (1) selon l'une quelconque des revendications précédentes, l'unité de calcul de simulation (7) est conçue pour surveiller en continu une mesure de pertinence et/ou une mesure de criticité de la fonction de commande de conduite et, en cas de dépassement d'une valeur limite dans la mesure de pertinence et/ou la mesure de criticité, pour mémoriser les données de capteur virtuel actuelles et passées dans une période prédéfinie et/ou des données sur le déroulement du trafic du dispositif de capteur (5), ainsi que l'image virtuelle de la zone prédéfinie réelle dans une base de données dédiée.

6. Système (1) selon l'une quelconque des revendications précédentes, l'unité de calcul de simulation (7) est conçue pour générer un usager virtuel supplémentaire sans équivalent réel dans la zone prédéfinie (11) autour du véhicule d'essai virtuel et pour simuler un comportement de l'usager virtuel.

7. Système (1) selon l'une quelconque des revendications précédentes, l'unité de calcul de simulation (7) est conçue pour diviser les usagers de la route réels (9) détectés par le dispositif de détection (5) en catégories prédéterminées et pour effectuer la simulation de la circulation sur la base de la division.

8. Système (1) selon l'une quelconque des revendications 1 à 7, l'unité de calcul de simulation (7) est conçue pour générer, dans la simulation de trafic, des trajectoires des usagers de trafic virtuels en dehors de la zone prédéfinie (11) autour du véhicule d'essai virtuel exclusivement à partir des trajectoires des usagers de trafic réels, et avec le dépassement des trajectoires des usagers de trafic virtuels respectifs par la limite à l'intérieur de la zone prédéfinie (11), les trajectoires des usagers de trafic virtuels sont générées exclusivement virtuellement.

9. Système (1) selon l'une quelconque des revendications 1 à 7, l'unité de calcul de simulation (7) est conçue pour générer, dans la simulation de trafic, des trajectoires des usagers de la route virtuels en dehors de la zone prédéfinie (11) autour du véhicule d'essai virtuel exclusivement à partir des trajectoires des usagers de la route réels, et pour se baser en continu sur les trajectoires des usagers de la route virtuels au-delà de la limite à l'intérieur de la zone prédéfinie (11) avec le dépassement des trajectoires des usagers de la route réels et avec l'approche croissante du véhicule d'essai virtuel avec une intensité accrue de réaction au véhicule d'essai virtuel.

10. Procédé pour tester une fonction de commande automatique de conduite d'un véhicule d'essai (3), comprenant les étapes suivantes :
- surveillance (S1) d'un événement de circulation dans une zone géographique prédéfinie par un dispositif de détection (5), le dispositif de détection (5) étant positionné par rapport à la zone géographique prédéfinie de manière à détecter en continu des trajectoires de circulation d'usagers de la route réels (9) dans la zone géographique,
- transmission (S2) de données sur le trafic à une unité de calcul de simulation (7) par l'intermédiaire du dispositif de détection (5),
- réalisation (S3) d'une simulation de trafic, par l'unité de calcul de simulation (7), dans une image virtuelle de la zone géographique et avec un véhicule d'essai virtuel comme image d'un véhicule d'essai réel (3) situé à l'extérieur de la zone géographique prédéfinie et avec des participants virtuels à la circulation dont les trajectoires correspondent au moins à l'extérieur d'une zone prédéfinie (11) autour du véhicule d'essai virtuel aux trajectoires détectées des participants à la circulation réelle (9) et s'écartent des trajectoires réelles à l'intérieur de la zone prédéfinie (11) par une réaction virtuelle au véhicule d'essai,
- production (S4) de données de capteurs virtuels en temps réel adaptées aux caractéristiques des capteurs du véhicule d'essai réel (3) par l'unité de calcul de simulation (7) sur la base de la simulation de trafic effectuée et la transmission de ces données à une interface de capteur du véhicule d'essai réel (3), et
- exécution (S5) d'une fonction de commande de conduite automatique sur la base des données de capteurs virtuels par le véhicule d'essai réel (3).
